# EUROPEAN PATENT APPLICATION

(11) **EP 4 641 977 A1**
(43) Date of publication of application: **29.10.2025**
(21) Application number: 25171383.0
(22) Date of filing: 17.04.2025
(51) Int. Cl.: H04L 9/40, G06F 21/10

(54) **ELECTRONIC DEVICE, METHOD FOR CONTROLLING ELECTRONIC DEVICE, PROGRAM, AND STORAGE MEDIUM**

(30) Priority: 26.04.2024 JP 2024072494
(71) Applicant: CANON KABUSHIKI KAISHA, Tokyo 146-8501 (JP)
(72) Inventor: SUZUKI, Takeshi, Tokyo, 146-8501 (JP)
(74) Representative: Canon Europe Limited

(57) **Abstract**

An electronic device includes a connection control unit for controlling the electronic device to connect with a network communicable with a specific external system, and a display control unit for performing control to display a reception screen for receiving an operation representing user agreement with a permission matter regarding transmission of information from the electronic device to a transmission destination, based on the electronic device being connected with the network by the connection control unit, and not to display the reception screen in a case where the electronic device is not connected with the network.

## Description

### BACKGROUND OF THE INVENTION

### Field of the Invention

The present invention relates to an electronic device, a method for controlling an electronic device, a program, and a storage medium.

### Description of the Related Art

There has conventionally been a system that transmits status information of an electronic device to a server based on a user agreement, and provides a service suitable for a state of the electronic device by the server analyzing the status information.

Japanese Patent No. 7134772 discusses a system that obtains agreement with permission for information transmission from a user of a multifunctional peripheral, transmits status information to a server, and uses the status information for a service.

The handling of user information like status information of an electronic device sometimes changes. For example, user information collection is sometimes regulated due to law amendment in each country. To avoid violating a law, information indicating whether a permission is to be obtained again is acquired by connecting an electronic device to a network, and in a case where a permission is to be obtained again, a permission message for user information collection is also to be updated, and a permission is to be obtained again from a user (agreement with the updated permission message).

Nevertheless, the system discussed in Japanese Patent No. 7134772 displays a permission screen irrespective of whether an electronic device has already connected to a network, and thus the system needs to display the permission screen again (i.e., by performing second-time display of the permission screen) to receive an agreement, even if agreement has once been obtained before the network connection by displaying a permission screen to receive the agreement with a permission matter, in a case where it is detected that the permission matter has been updated after the network connection. In this case, the user needs to perform a permission operation twice, which has deteriorated user's convenience. In addition, a user who uses an apparatus without connecting an electronic device to a network is also required to perform an operation of agreement with a permission matter regarding information transmission that is originally not required, which has deteriorated user's convenience.

### SUMMARY OF THE INVENTION

The present invention is directed to providing a structure of enabling an operation of receiving an agreement with a permission matter regarding information transmission, to be performed more desirably.

According to an aspect of the present invention, there is provided an electronic device as specified in claims 1 to 12. According to a second aspect of the present invention, there is provided a method for controlling an electronic device as specified in claim 13. According to a third aspect of the present invention, there is provided a computer program as specified in claim 14. According to a fourth aspect of the present invention, there is provided a storage medium as specified in claim 15.

Further features of the present invention will become apparent from the following description of embodiments with reference to the attached drawings.

### BRIEF DESCRIPTION OF THE DRAWINGS

Fig. 1 is a diagram illustrating a configuration example of a system.
Figs. 2A to 2D are diagrams illustrating examples of permission messages and examples of version management.
Fig. 3 is a diagram illustrating a configuration example of an image processing apparatus.
Figs. 4A to 4D are diagrams each illustrating an example of information stored in the image processing apparatus.
Figs. 5A to 5C are flowcharts illustrating a control method of the image processing apparatus.
Figs. 6A to 6D are diagrams each illustrating a display screen example.
Figs. 7A, 7B1 and 7B2 are flowcharts illustrating permission reception screen processing.
Figs. 8A and 8B are diagrams illustrating transition of display screens.

### DESCRIPTION OF THE EMBODIMENTS

Hereinafter, an embodiment of the present invention will be described with reference to the drawings. The components described in the present embodiment merely indicate examples of the present invention, and the scope of the present invention is not limited to these. Each of the embodiments of the present invention described below can be implemented solely or as a combination of a plurality of the embodiments of features thereof where necessary or where the combination of elements or features from individual embodiments in a single embodiment is beneficial.

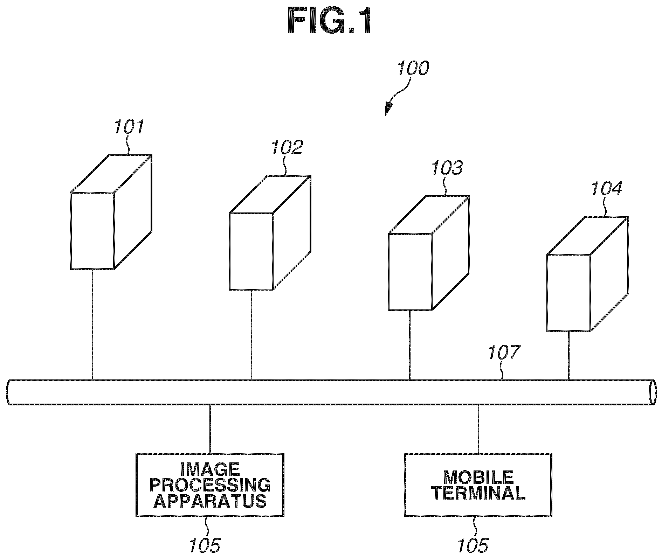

Fig. 1 is a diagram illustrating a configuration example of a system 100 according to the present embodiment. The system 100 includes a service providing server group 101 for providing a service, a server 102, a server 103, a web server 104, an image processing apparatus 105, and a mobile terminal 106, which are connected via a communication network 107 in such a manner that communication can be performed with each other.

The image processing apparatus 105 is one type of an electronic device, and is a printer capable of printing print data on a printing medium such as a print sheet. The image processing apparatus 105 can use various cloud services (i.e., web services) provided by the service providing server group 101 via the communication network 107.

For example, the image processing apparatus 105 acquires and prints print data (e.g., photos, documents, games such as Sudoku, fixed-format documents such as music sheets and graph paper, paper crafts, and calendar) stored on a cloud (i.e., the service providing server group 101). In addition, for example, scan data read by a scanner included in the image processing apparatus 105 can be stored on the cloud or transmitted via an e-mail.

When the image processing apparatus 105 uses a service provided by the service providing server group 101, the image processing apparatus 105 acquires a user permission for the transmission of information regarding a service use. For this reason, when the image processing apparatus 105 uses a service provided by the service providing server group 101 for the first time (in first-time use), the image processing apparatus 105 displays a screen for a user to select whether to agree or not agree (disagree) with a service permission message. The image processing apparatus 105 then performs control to obtain the user's agreement with the service permission message by accepting the selection of an option corresponding to the agreement.

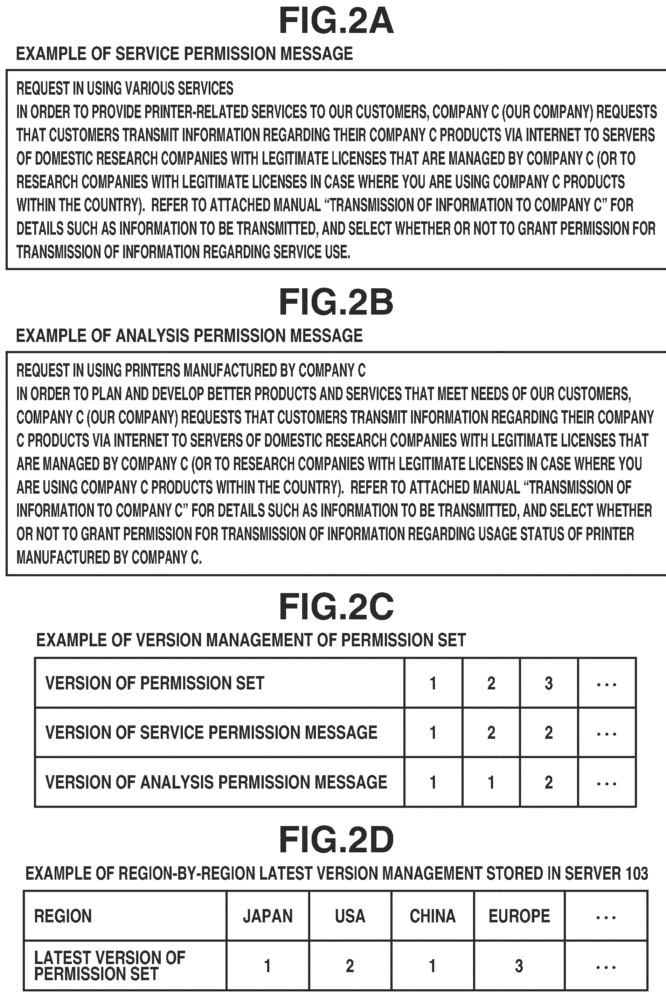

Fig. 2A illustrates an example of a service permission message. In a case where an operation of agreeing with a service permission message is performed, it is determined that a user permission for the transmission of information regarding a service use has been acquired. The service permission message to be agreed with is sometimes updated by an administrator in accordance with various situation changes such as function addition to a service or the image processing apparatus 105, or law amendment. For this reason, the image processing apparatus 105 according to the present embodiment performs control to reacquire a permission from a user if the service permission message is updated when using a service provided by the service providing server group 101, from the image processing apparatus 105, irrespective whether the use is first-time use.

The image processing apparatus 105 also transmits information regarding a usage situation of the image processing apparatus 105, to a server at a specific timing to enable a service provider to use the information for user analysis. The specific timing is, for example, a fixed time on a fixed day in every month (one regular timing in a month). The user permission for the transmission of the information regarding a usage situation of the image processing apparatus 105 is to be acquired as well. For this reason, a screen for a user selecting whether to agree or not agree (disagree) with an analysis permission message is displayed before the information regarding a usage situation is transmitted from the image processing apparatus 105. The image processing apparatus 105 then performs a control in such a manner that user agreement with the analysis permission message is obtained by receiving the selection of an option corresponding to the agreement.

In the present embodiment, control is performed to separately obtain user agreement with the service permission message and user agreement with the analysis permission message. Fig. 2B illustrates an example of an analysis permission message. In a case where an operation of agreeing with an analysis permission message is performed, it is determined that a user permission for the transmission of information regarding a usage situation has been acquired. The analysis permission message to be agreed with is sometimes updated by an administrator in accordance with various situation changes such as function addition to a service or the image processing apparatus 105, or law amendment. For this reason, the image processing apparatus 105 according to the present embodiment performs control to reacquire a permission from a user if the analysis permission message is updated when transmitting information regarding a usage situation to a server from the image processing apparatus 105, irrespective whether the transmission is first-time transmission.

A service permission message and an analysis permission message are managed with being assigned a new version number each time update is performed. As illustrated in Fig. 2C, a combination of a version of a service permission message and a version of an analysis permission message is managed with being assigned a version of a permission set.

For example, as illustrated in Fig. 2C, a version 1 of a permission set is a combination of a version 1 of a service permission message and a version 1 of an analysis permission message. A version 2 of a permission set is a combination of a version 2 of a service permission message and a version 1 of an analysis permission message. Because the versions of the service permissions are different while the versions of the analysis permission message are the same (version 1) between the versions 1 and 2 of the permission sets, the version of the permission set becomes not 1 but 2. Such information regarding versions is recorded on the server 102 and the server 103. The version combinations illustrated in FIG. 2C are examples, and the present invention is not limited to these specific combinations.

A region-by-region (country-by-country) latest version of a permission set is managed with being recorded on the server 103. Fig. 2D illustrates an example of information recorded on the server 103. As illustrated in Fig. 2D, for example, a latest version of a permission set in Japan is the version 1. For this reason, it can be identified by checking the information against the information illustrated in Fig. 2C that the version of a service permission message to be agreed with in Japan at the present moment is the version 1, and the version of an analysis permission message to be agreed with is the version 1.

As illustrated in Fig. 2D, for example, a latest version of a permission set in the United States is the version 2. For this reason, it can be identified by checking the information against the information illustrated in Fig. 2C that the version of a service permission message to be agreed with in the United States at the present moment is the version 2, and the version of an analysis permission message to be agreed with is the version 1.

In this manner, control can be performed to acquire agreement with a service permission message and an analysis permission message that are suitable for the server 103 of a region (country) where the image processing apparatus 105 is installed by managing the version of a permission message to be agreed with, by region (country) of the world.

Region-by-region (country-by-country) latest permission messages (service permission message and analysis permission message as illustrated in Figs. 2A and 2B) are recorded on the web server 104.

In the present embodiment, the server 102 and the server 103 are separately illustrated, but the server 102 and the server 103 may be integrated into one.

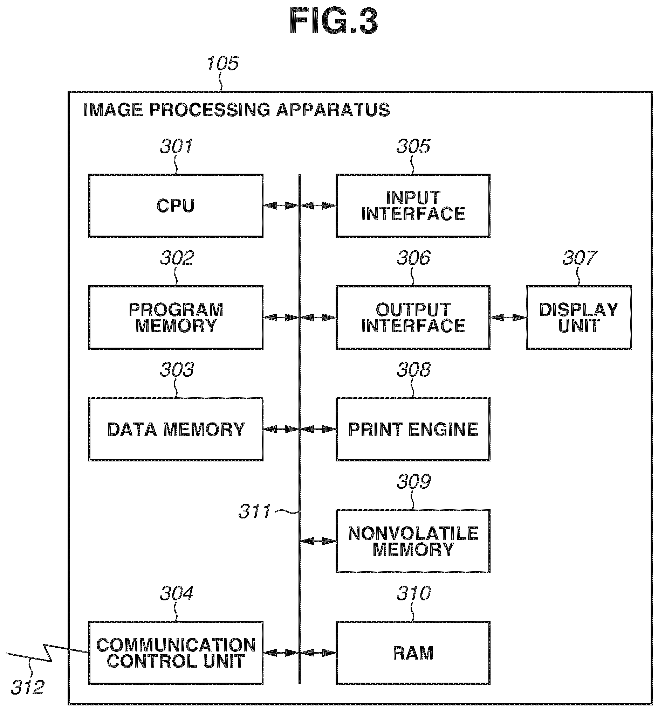

Fig. 3 is a diagram illustrating a configuration example of the image processing apparatus 105 according to the present embodiment. The image processing apparatus 105 is one type of an electronic device, and is a printer that can execute print processing using a print engine 308, or a print control apparatus that transmits print data to a printer. A central processing unit (CPU) 301, a program memory 302, a data memory 303, a communication control unit 304, an input interface 305, an output interface 306, a display unit 307, a print engine 308, a nonvolatile memory 309, and a random access memory (RAM) 310 are connected via a bus 311.

The CPU 301 is a system control unit including at least one processor, and controls the entire image processing apparatus 105. The program memory 302 is a nonvolatile storage medium storing control programs to be executed by the CPU 301, and embedded operating system programs. The data memory 303 stores program control variables, and includes various work buffer regions to be used during processing of the print engine 308.

The communication control unit 304 controls data transmission to and reception from the outside via a communication line 312. The communication control unit 304 is a communication interface such as a wired local area network (LAN) or a wireless LAN, for example. The communication control unit 304 can communicate with the service providing server group 101, the server 102, and the server 103 via the communication line 312 and the communication network 107.

The input interface 305 is an interface for receiving data input and operation instructions from the user, and includes operation members such as a physical keyboard, buttons, and a touch panel. The output interface 306 to be described below and the input interface 305 can be integrated into a single member that performs screen output and the reception of operations from the user. The output interface 306 is an interface that controls the display unit 307 to display data or notify the user of the state of the image processing apparatus 105.

The display unit 307 is a display that includes a light-emitting diode (LED) or a liquid crystal display (LCD), and displays data and notifies the user of the state of the image processing apparatus 105. Inputs from the user can be received via the display unit 307 by displaying software keys such as numerical entry keys, mode setting keys, a determination key, an undo key, and a power key on the display unit 307.

The print engine 308 forms an image (performs printing) on a recording medium such as paper using a recording material such as ink based on information stored in the data memory 303 or a received print job, and outputs a print result.

The nonvolatile memory 309 includes devices such as an electrically erasable programmable read-only memory (EEPROM) and a flash memory. The nonvolatile memory 309 is mainly used for storing data such as setting values of the image processing apparatus 105 that needs to be held even when the power of the image processing apparatus 105 is not supplied.

The RAM 310 includes a dynamic random access memory (DRAM) that requires a backup power supply. The RAM 310 is also used as a main memory and a work memory of the CPU 301, and stores a reception buffer for temporarily storing print information received from the mobile terminals 106, and various types of information.

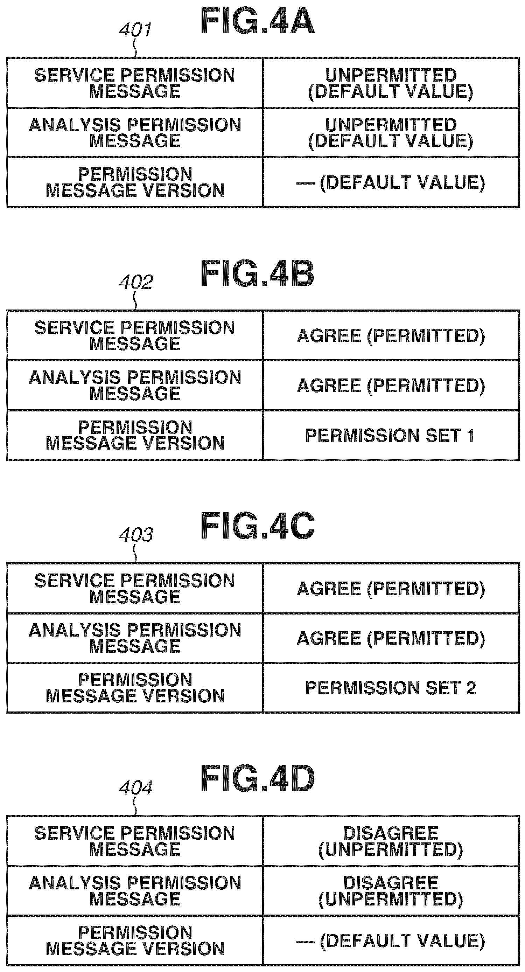

Figs. 4A to 4D each illustrate an example of management information of an agreement status (permission state) of a permission message in the image processing apparatus 105 that is stored in the nonvolatile memory 309. The nonvolatile memory 309 stores management information of a permission state that indicates whether an operation has been received that is representing user agreement with a permission matter indicating that the user permits the transmission of information from the image processing apparatus 105 to the service providing server group (transmission destination) 101.

The management information of the permission state that is stored in the nonvolatile memory 309 includes information indicating whether an operation has been received that is representing a user permission for the transmission of information regarding the image processing apparatus 105 from the image processing apparatus 105 to the service providing server group 101 via the communication network 107. The communication network 107 is the internet, for example.

A recorded state 401 indicates an example of a default value of management information of a permission state in a factory default state of the image processing apparatus 105. Both the service permission message and the analysis permission message have a value corresponding to an unpermitted state. The unpermitted state refers to a state in which the user has neither agreed nor disagreed with any permission message. A default value indicating that no version is applicable is recorded as a permission message version. As information indicating permission states of the service permission message and the analysis permission message, a value corresponding to any of three states including two states corresponding to agreement (permitted) and disagreement (unpermitted) is recorded aside from the unpermitted state indicated in the recorded state 401.

A recorded state 402 is a recorded state indicating a state in which the user has agreed with a version 1 of a service permission message corresponding to a permission set 1, and the user has agreed with a version 1 of an analysis permission message corresponding to the permission set 1. For example, the recorded state 402 is a recorded state to be recorded in a case where the user has performed the registration into a cloud service with a view to using a service for the first time, and performed an operation of agreeing with a service permission message and an analysis permission message, at a timing of certain date and time A from the default state in the recorded state 401. The agree (permitted) indicates that an operation representing agreement has been received.

The management information of a permission state of a service permission message is information indicating whether an operation has been received that is representing a user permission for the transmission of information regarding a service use from the image processing apparatus 105 to the service providing server group 101 via the communication network 107.

The management information of a permission state of an analysis permission message is information indicating whether an operation has been received that is representing a user permission for the transmission of information regarding a usage situation of the image processing apparatus 105 from the image processing apparatus 105 to the service providing server group 101 via the communication network 107.

In a case where a permission state of a service permission message or an analysis permission message is a permission state indicating that an operation representing user agreement has been received, a version of the permission message (permission matter) is stored in the permission message version as identifiable information.

A recorded state 403 is a recorded state indicating a state in which the user has agreed with a version 2 of a service permission message corresponding to a permission set 2, and the user has agreed with a version 1 of an analysis permission message corresponding to the permission set 2. For example, the user tries to use the service again at a timing of date and time B which is later than the date and time A from the state in the recorded state 402 in which the user has already performed registration into the cloud service and has ever used the service. The recorded state 403 is a recorded state to be recorded in a case where a permission message is updated in this case, processing of requiring the user to agree with each permission message again has been performed, and an operation of agreeing with each permission message has been performed.

If an operation of initializing the main body of the image processing apparatus 105 is performed from the state in the recorded state 402 or 403, the state is initialized to the state in the recorded state 401. A recorded state 404 is a recorded state indicating a state in which the user has disagreed with each permission message.

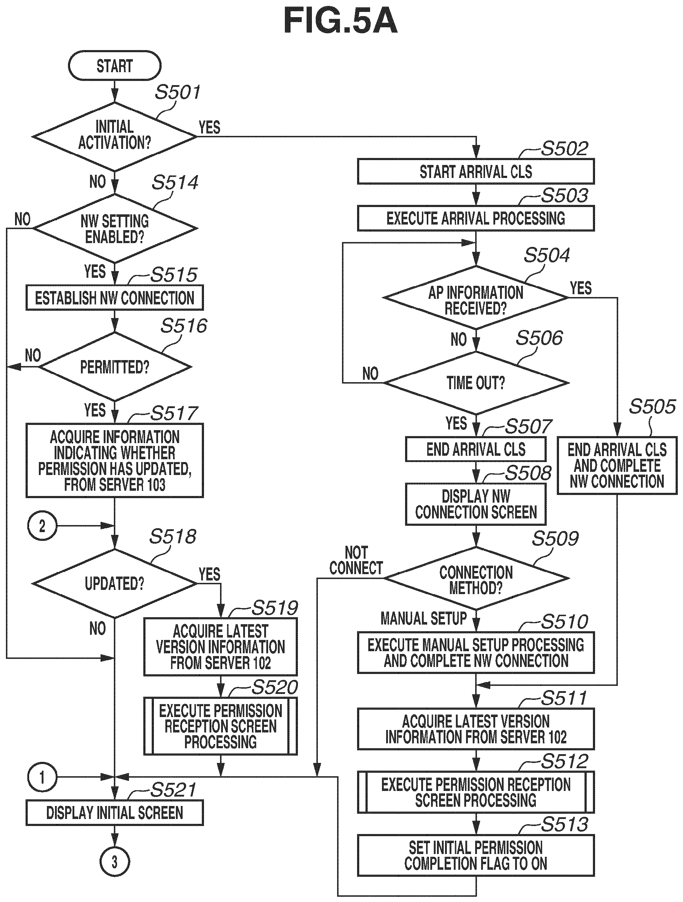

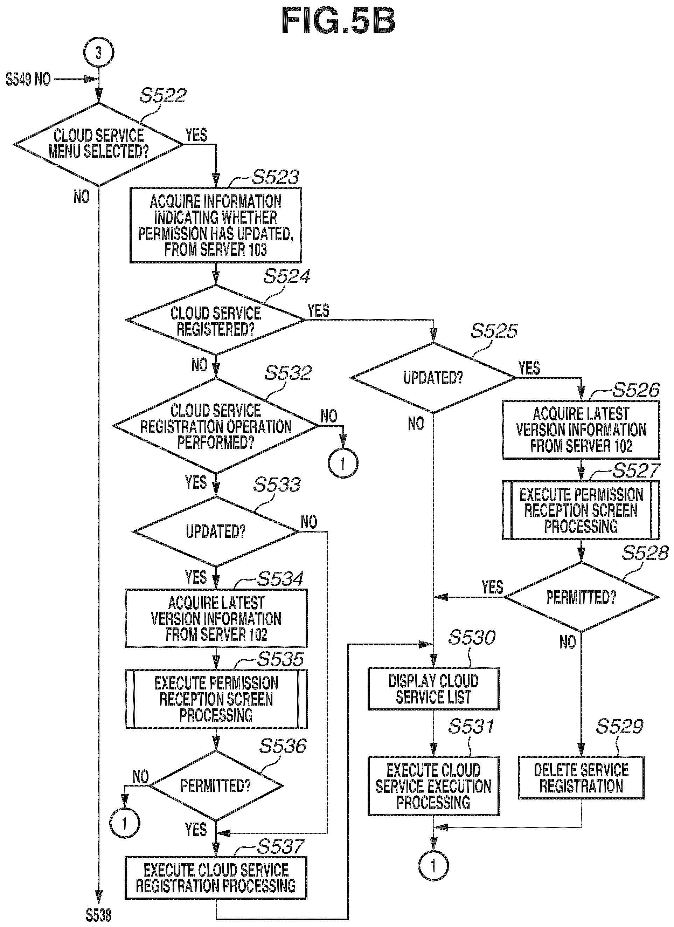

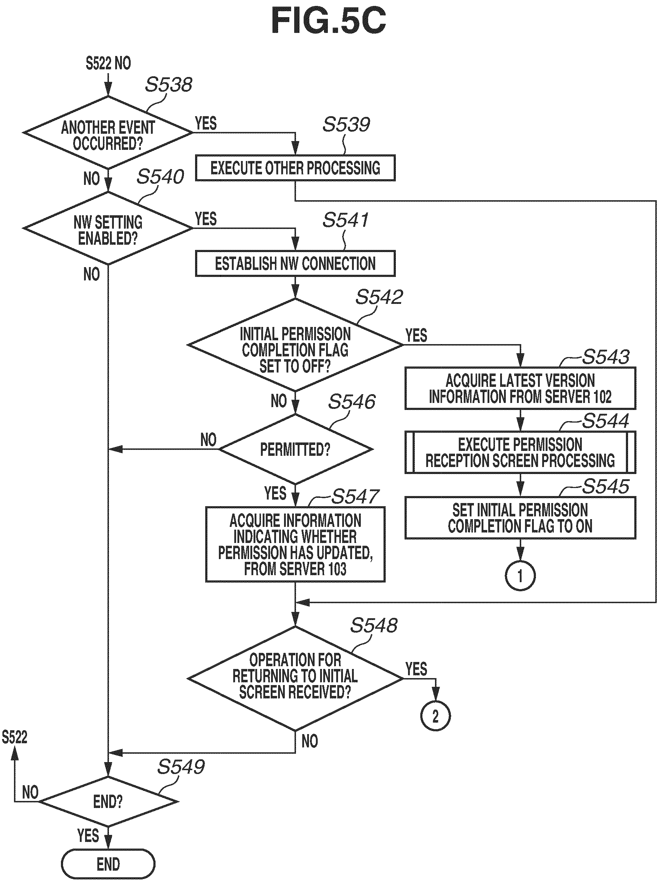

Figs. 5A to 5C are flowcharts illustrating a control method of the image processing apparatus 105 according to the present embodiment. A flow of processing will be described from when the user turns the power of the image processing apparatus 105 on to when the user turns the power off. Each piece of processing in these flowcharts is implemented by the CPU 301 loading a program stored in the program memory 302, onto the RAM 310, and executing the program.

In step S501, referring to information indicating an initial activation timing (hereinafter, arrival timing) at which a first-time default setting is performed after the power is turned on that is stored in the nonvolatile memory 309, the CPU 301 determines whether a current timing is the arrival timing. In a case where a current timing is the arrival timing (YES in step S501), the processing proceeds to step S502. In a case where a current timing is not the arrival timing (NO in step S501), the processing proceeds to step S514.

In step S502, the CPU 301 starts arrival cableless setup (hereinafter, arrival CLS). In the arrival CLS, the image processing apparatus 105 periodically transmits a beacon including a service set identifier (SSID) of the image processing apparatus 105 itself, and enters a state of being able to provide information included in the beacon, in response to access point (hereinafter, AP) search from a communication counterpart apparatus such as a personal computer (PC) (not illustrated). Thereafter, the processing proceeds to step S503.

In step S503, the CPU 301 executes arrival processing required at the time of arrival, such as a language setting, a date setting, ink tank attachment, arrival cleaning, and registration adjustment. Thereafter, the processing proceeds to step S504. If a connection request is received from the communication counterpart apparatus during the execution of the arrival processing, a communication parameter is exchanged, and internet protocol (IP) connection is executed.

In step S504, the CPU 301 determines whether AP information has been received from the communication counterpart apparatus. In a case where it is determined that AP information has not been received (NO in step S504), the processing proceeds to step S506. In contrast, in a case where it is determined that AP information has been received (YES in step S504), the processing proceeds to step S505.

In step S505, the CPU 301 ends the arrival CLS, and performs the setting of an AP for an infrastructure mode. Specifically, the CPU 301 sets a designated AP in the nonvolatile memory 309 as an AP to be passed through in the infrastructure mode, and in a case where a cryptography key is required in using the AP, registers the cryptography key. When the registration of the AP appropriately ends, the CPU 301 functions as a connection control unit, and controls the image processing apparatus 105 to connect to the AP registered in the infrastructure mode. The image processing apparatus 105 accordingly enters a state of being able to execute wireless communication via the set (registered) AP, and network connection is completed. A network setting is also enabled. The processing then proceeds to step S511.

In step S506, AP information has not been received, and thus the CPU 301 determines whether timeout has occurred. In this step, in a case where IP connection is not established with a communication counterpart apparatus or AP information is not received even if a predetermined time has elapsed since the arrival CLS had started in step S502, it is determined that timeout has occurred. In a case where it is determined that timeout has not occurred (NO in step S506), the processing returns to step S504. In contrast, in a case where it is determined that timeout has occurred (YES in step S506), the processing proceeds to step S507.

In step S507, the CPU 301 ends the arrival CLS, and the processing proceeds to step S508.

In step S508, the CPU 301 displays a screen for prompting the user to select whether to establish network connection by a method other than the arrival CLS, on the display unit 307. For example, the CPU 301 displays two options including "manual setup" and "not connect", and the processing proceeds to step S509.

In step S509, the CPU 301 determines which option has been selected by the user on the screen displayed in step S508. In a case where "manual setup" has been selected ("MANUAL SETUP" in step S509), the processing proceeds to step S510. In contrast, in a case where "not connect" has been selected ("NOT CONNECT" in step S509), the processing proceeds to step S521.

In a case where "not connect" has been selected (i.e., in a case where the image processing apparatus 105 is not connected with a network that can communicate with an external system such as the server 103), an initial screen is displayed without passing through step S512 to be described below. That is, control is performed in such a manner that permission reception screen processing in step S512 (processing of displaying a permission screen for receiving agreement with a permission matter) is not performed.

In step S510, the CPU 301 performs manual setup processing of the network, such as an SSID setting of an AP as the setting of an AP for the infrastructure mode, and the registration of a cryptography key in a case where a cryptography key is required in using the AP. If the registration of the AP into the nonvolatile memory 309 appropriately ends, the CPU 301 controls the image processing apparatus 105 to connect to the AP registered in the infrastructure mode. The image processing apparatus 105 thereby enters a state of being able to execute wireless communication via the set (registered) AP, and network connection is completed. A network setting is also enabled. The processing then proceeds to step S511.

In step S511, the CPU 301 acquires, from the server 102, information regarding the version of the latest permission message in the installation region (information from which the version of the latest permission message can be identified). Such a processing can be made similar to the processing in step S517 to be described below, by acquiring the information from the server 103.

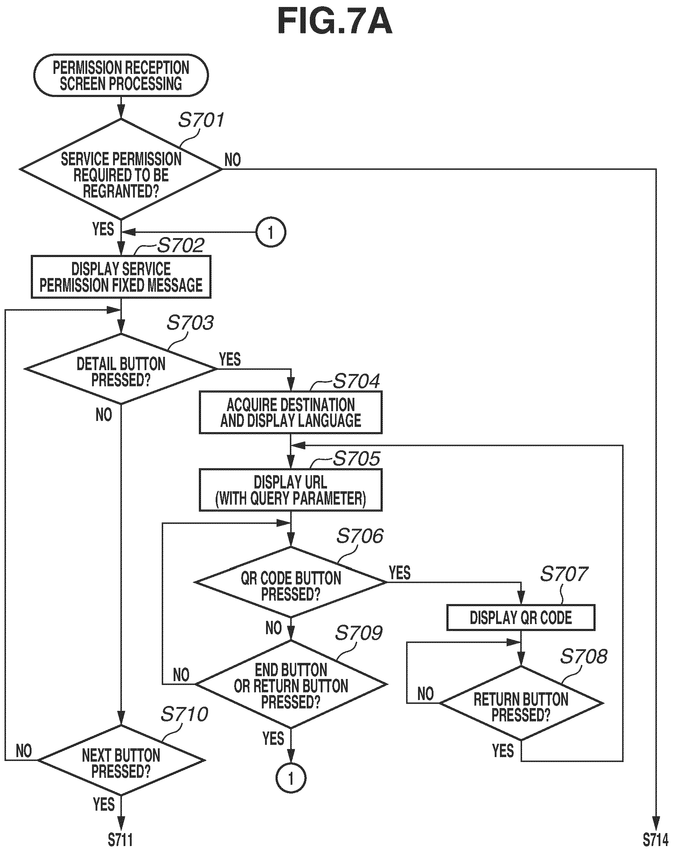

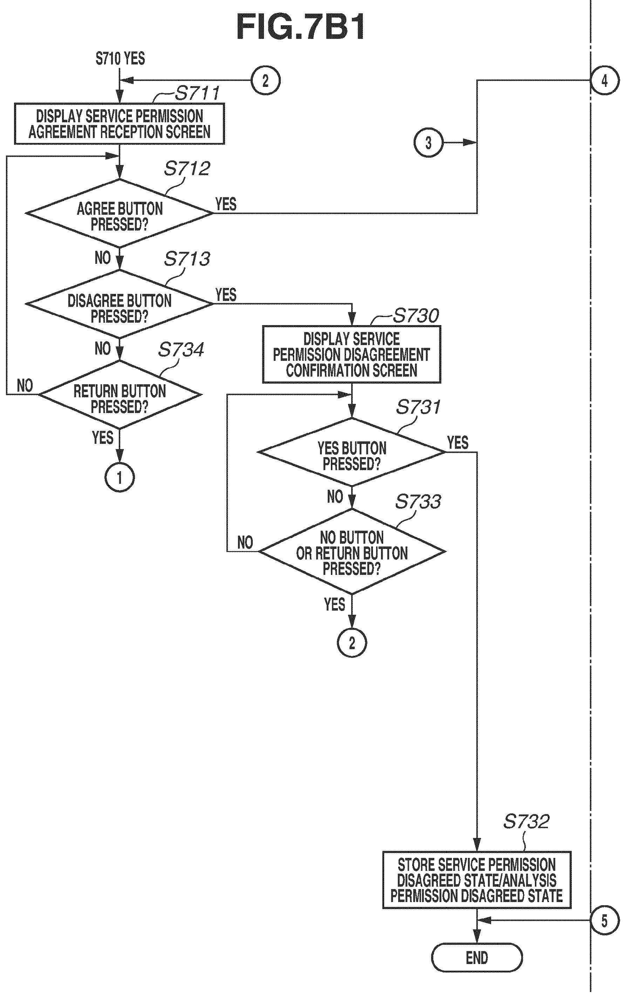

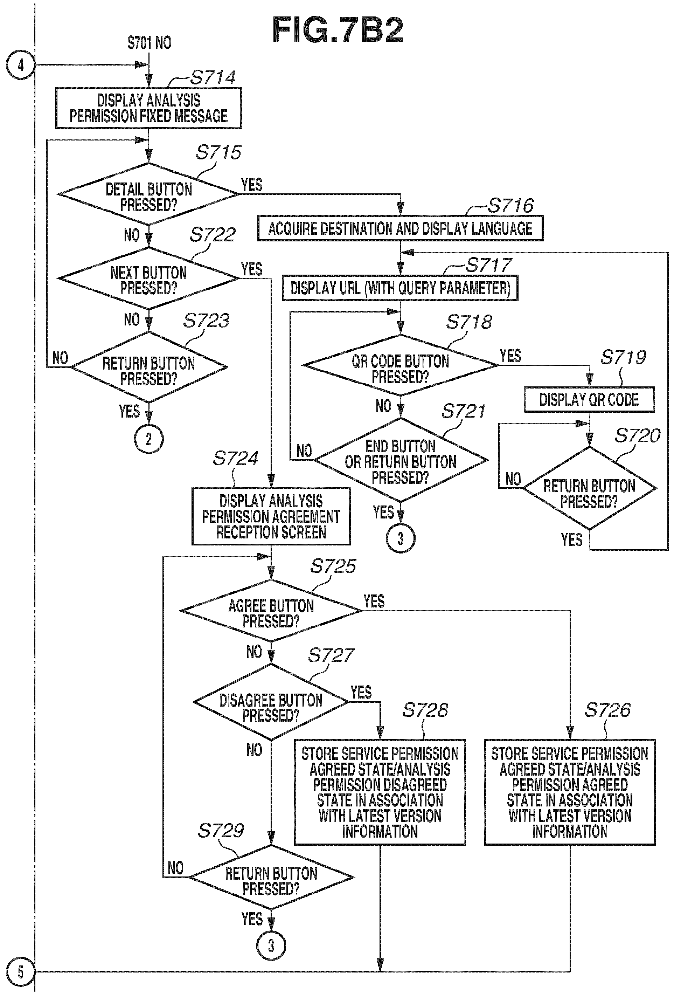

In step S512, the CPU 301 receives, through the permission reception screen processing, the presence or absence of agreement with (permission for) each latest permission message in the installation region from the user. Specifically, the CPU 301 controls the display unit 307 to display a permission reception screen for receiving an operation representing user agreement with a permission matter indicating that the user permits the transmission of information from the image processing apparatus 105 to the service providing server unit (transmission destination) 101. At the time, the CPU 301 functions as a display control unit (i.e., a display control means). The permission reception screen processing will be described below with reference to Figs. 7A, 7B1 and 7B2.

In a case where "not connect" has been selected in step S509 ("NOT CONNECT" in step S509), the image processing apparatus 105 is not connected with a network, and the CPU 301 performs control not to display the above-described permission reception screen.

In step S513, initial permission is completed, and thus the CPU 301 changes an initial permission completion flag stored in the nonvolatile memory 309, from OFF to ON. The processing then proceeds to step S521. The initial permission completion flag is a flag that has a default value set to OFF, and is to be set to ON if the initial permission is completed.

In step S514, the CPU 301 determines whether a network setting is enabled. The network setting is a setting item settable in accordance with a user operation from a setting menu under a hierarchy displayed by selecting an item of "main body installation" included in the initial screen (home screen) displayed in step S521 to be described below. For example, whether to enable or disable the network setting can be set in a setting item of "enabling/disabling of setting of wireless LAN" (setting item of wireless communication in the so-called infrastructure mode), and in a case where the setting item is enabled, the network setting is enabled. In a case where the network setting is changed to an enabled state, the network setting is enabled if the image processing apparatus 105 is actually connected to an access point serving as a connection destination. Even if an operation of trying to change the network setting to the enabled state is performed, the network setting is disabled in a case where the image processing apparatus 105 fails to actually connect to the access point.

Alternatively, whether to enable or disable the network setting can be set in a setting item of "enabling/disabling of setting of wired LAN", and in a case where the setting item is enabled, the network setting is enabled. In a case where the image processing apparatus 105 is actually connected to the wired LAN via a cable, and has connected with a device serving as a router, the network setting is enabled. Even if an operation of trying to change the network setting to the enabled state is performed, the network setting is disabled in a situation where communication with the router is inexecutable, such as a situation where a cable is actually not connected.

In step S514, in a case where both the wireless LAN and the wired LAN are disabled, it is determined that the network setting is disabled. In a case where the network setting is enabled (in a case where the image processing apparatus 105 is connected with a network that can communicate with an external system such as the server 103) (YES in step S514), the processing proceeds to step S515. In a case where the network setting is disabled (in a case where the image processing apparatus 105 is not connected with a network that can communicate with an external system such as the server 103) (NO in step S514), the processing proceeds to step S521. In a case where the network setting is disabled, the initial screen is displayed without passing through step S520 to be described below. That is, control is performed in such a manner that permission reception screen processing in step S520 (processing of displaying a permission screen for receiving agreement with a permission matter) is not performed.

In step S515, the CPU 301 controls the image processing apparatus 105 to connect to the AP registered in the infrastructure mode, or the router. The processing then proceeds to step S516.

In step S516, the CPU 301 determines whether user agreement with the latest service permission message has been obtained in the "permission reception screen processing" in steps S512, S520, S527, S535, and S544. Specifically, the CPU 301 refers to the management information of a permission state (Figs. 4A to 4D) in the image processing apparatus 105 that is stored in the nonvolatile memory 309. The CPU 301 then determines whether a value corresponding to "agree (permitted)" is recorded as a value indicating an agreement status of an analysis permission message or a service permission message. In a case where a value corresponding to "agree (permitted)" is recorded as either or both of these (YES in step S516), the processing proceeds to step S517. In a case where a value corresponding to "agree (permitted)" is not recorded (NO in step S516), the processing proceeds to step S521.

In step S517, the CPU 301 acquires information making identifiable a version of a latest service permission message to be agreed with in an installation region (installation country) of the image processing apparatus 105, from the server 103, as information regarding the update of a service permission message. In this step, the CPU 301 functions as an acquisition unit. The version of the latest service permission message is a version to be agreed with at the present moment, and is a version of a service permission message that the user is required to agree with. The server 103 is one type of an external device.

More specifically, the CPU 301 transmits, to the server 103, information (one or both, i.e., at least one of an IP address and destination information stored in the nonvolatile memory 309) making identifiable a region (country) where the image processing apparatus 105 is installed. The server 103 transmits, to the image processing apparatus 105, a version of a latest permission set in a region corresponding to the information making a region identifiable that has been received from the image processing apparatus 105, among region-by-region latest versions illustrated in Fig. 2D. That is, the image processing apparatus 105 acquires, from the server 103, a version of a permission set indicating a permission message to be agreed with in an installation region of the image processing apparatus 105.

In step S518, the CPU 301 compares the version of the permission set indicating the permission message to be agreed with in the installation region of the image processing apparatus 105 that has been acquired in step S517, and management information of a permission state in the image processing apparatus 105 that is stored in the nonvolatile memory 309. The management information of the permission state includes a permission message version illustrated in Figs. 4A to 4D. The CPU 301 determines whether the permission message (permission matter) to be agreed with has been updated from the permission message that the user has agreed with in the image processing apparatus 105. That is, the CPU 301 determines whether a permission message is to be agreed with again. In a case where the permission message has been updated (the permission message is to be agreed with again) (YES in step S518), the processing proceeds to step S519. In a case where the permission message has not been updated (the permission message is not to be agreed with again) (NO in step S518), the processing proceeds to step S521 without the execution of the processing in steps S519 to S520 (i.e., without further user operation).

More specifically, the CPU 301 compares the version of the permission set indicating the permission message to be agreed with in the installation region of the image processing apparatus 105 that has been acquired in step S517, and a version of a permission set of a permission message version in the management information of the permission state that is stored in the nonvolatile memory 309. In a case where the version that the user is to agree with and the version that the user has already agreed with are the same, the CPU 301 determines that agreement is not to be obtained again. In a case where the version that the user is to agree with and the version that the user has already agreed with are different, the CPU 301 determines that agreement is to be obtained again. If the version that the user is to agree with is larger than the version that the user has already agreed with, the CPU 301 determines that agreement is to be obtained again.

In step S519, the CPU 301 acquires, from the server 102, information indicating the version (latest version of the permission set) of the latest permission message in the installation region of the image processing apparatus 105 that has been acquired in step S517. As the version that the user has already agreed with, which is to be stored in the nonvolatile memory 309 when the user agrees with each permission message in subsequent processing in step S520, the version of the latest permission set that has been acquired in step S519 is recorded. Alternatively, this step S519 can be skipped, and the version of the latest permission set in the installation region that has been acquired in step S517 can also be recorded as the version that the user has already agreed with, which is to be stored in the nonvolatile memory 309 when the user agrees with each permission message in step S520.

In step S520, the CPU 301 receives, through the permission reception screen processing, the presence or absence of agreement with (permission for) each latest permission message in the installation region from the user, similarly to step S512 described above. Specifically, the CPU 301 controls the display unit 307 to display a permission reception screen for receiving an operation representing user agreement with a permission matter indicating that that the user permits the transmission of information from the image processing apparatus 105 to the service providing server group (transmission destination) 101. The permission reception screen processing will be described below with reference to Figs. 7A, 7B1 and 7B2. In this manner, even in a case where a permission has already been obtained, it is determined whether agreement with a permission message is to be obtained again each time the image processing apparatus 105 is activated. If agreement with a permission message is to be obtained again, agreement is obtained again. This configuration makes it possible to prevent a situation where information regarding a usage situation is transmitted or a service is executed without the agreement being obtained again, in a case where agreement with a permission message is to be obtained again.

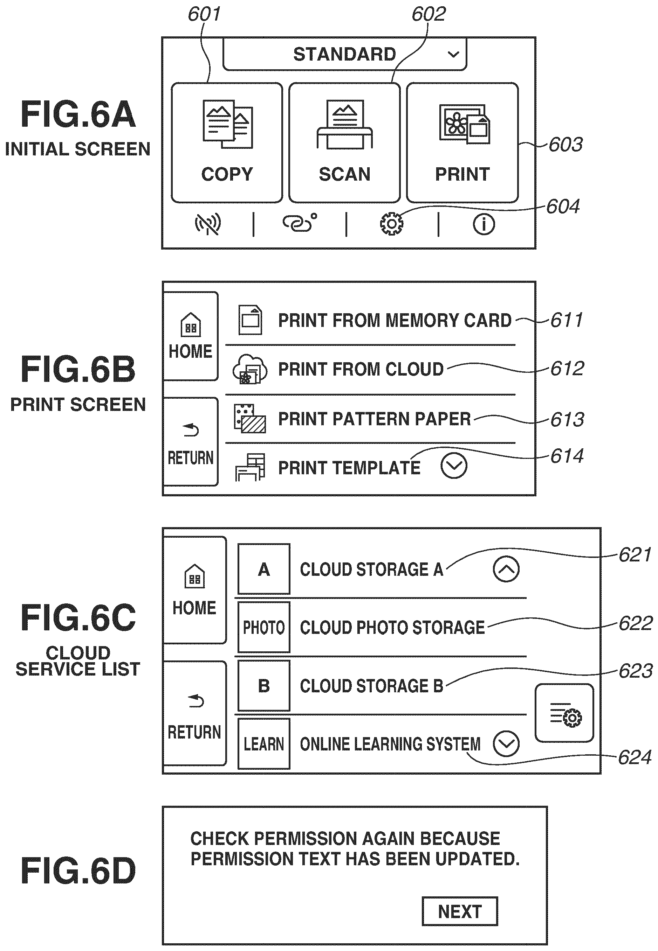

In the processing in step S520, the CPU 301 displays a screen illustrated in Fig. 6D before the processing in step S701 of Fig. 7A is performed. This screen displays a message indicating that the reason of the reacquisition of a permission is an update of a permission text (permission message) saying "Please check a permission again because a permission text has been updated.", and that a permission to be checked again is to be displayed from now. This configuration makes it possible for a user who has ever agreed with and permitted a permission message once to understand the reason why the user is required to agree with a permission message again, and to perform a permission operation again without misunderstanding the message as or confusing the message with an operation failure. When a next button on the screen in Fig. 6D is pressed, the processing in step S701 of Fig. 7A described below is started. Similarly, the screen in Fig. 6D is displayed also in processing in step S527 or S535 described below (processing of receiving a permission again) before the processing in step S701 of Fig. 7A is performed. In contrast, in step S512 described above or in step S545 described below in which processing of receiving a permission for the first time is performed instead of the processing of receiving a permission again, the processing in step S701 of Fig. 7A is performed without displaying the screen in Fig. 6D.

In a case where it is determined that the network setting is disabled (NO in step S514), the image processing apparatus 105 is not connected with a network, and the CPU 301 performs control not to display the above-described permission reception screen. In a case where a value corresponding to "agree (permitted)" is not recorded (NO in step S516), the CPU 301 performs control not to display the above-described permission reception screen because a value corresponding to "disagree (unpermitted)" is recorded in both an analysis permission message and a service permission message.

In step S521, the CPU 301 controls the display unit 307 to display an initial screen (home screen). Fig. 6A illustrates a display example of an initial screen (home screen) to be initially displayed after the image processing apparatus 105 is activated. The initial screen displays buttons 601 to 603 of options corresponding to functions executable by the image processing apparatus 105, such as copy, scan, and print.

In step S522, the CPU 301 determines whether the selection of a menu item related to a cloud service has been performed by the user. In a case where a menu item related to a cloud service has been selected (YES in step S522), the processing proceeds to step S523. In a case where a menu item related to a cloud service has not been selected (NO in step S522), the processing proceeds to step S538.

The selection of a menu item related to a cloud service can be performed by, for example, selecting a "print" button 603 in Fig. 6A, transitioning to a print screen illustrated in Fig. 6B, and selecting a "print from cloud" menu 612. The "print from cloud" menu 612 is an example of a menu item (selection item) related to a cloud service.

On the print screen illustrated in Fig. 6B, a "print from memory card" menu 611, the "print from cloud" menu 612, a "print pattern paper" menu 613, and a "print template" menu 614 are selectable. In a case where the network setting is disabled (in a case where the image processing apparatus 105 is not connected with a network that can communicate with an external system such as the server 103), a selection item related to a cloud service is made unselectable, or the processing does not proceed to step S523 even if the selection item is selected. In a case where the network setting is disabled, display for prompting the user to change the network setting to the enabled state can be performed without advancing the processing to step S523 if a selection item related to a cloud service is selected.

In step S523, the CPU 301 acquires information indicating whether a permission has been updated from the server 103, and the processing proceeds to step S524. In step S517, it is checked whether a permission has been updated, at a timing at which the power of the image processing apparatus 105 is turned ON. However, it is checked again whether a permission has been updated considering a possibility that time may elapse from the power ON timing until a cloud service is used by the user in step S522. The processing is similar to the above-described processing in step S517, and thus the description will be omitted.

In step S524, the CPU 301 determines whether the image processing apparatus 105 has already been registered in a cloud service. In a case where the image processing apparatus 105 has already been registered in the cloud service (YES in step S524), the processing proceeds to step S525. In a case where the image processing apparatus 105 has not been registered in the cloud service (NO in step S524), the processing proceeds to step S532.

The image processing apparatus 105 cannot be registered in the cloud service unless the user has agreed with a service permission message. Thus, in a case where it is determined in step S524 that the image processing apparatus 105 has already been registered in in the cloud service, a value indicating agreement with (permission for) the service permission message is recorded in the management information of a permission state.

In step S525, the CPU 301 determines whether the information acquired in step S523 indicates that a permission has been updated. In a case where a permission has been updated (YES in step S525), the processing proceeds to step S526. In a case where a permission has not been updated (NO in step S525), the processing proceeds to step S530 because the permitted state is recorded as described above in step S524. The processing is similar to the above-described processing in step S518, and the description will be omitted.

In step S526, the CPU 301 acquires information regarding the latest permission message from the server 102, and the processing proceeds to step S527. The processing is similar to the above-described processing in step S519, and the description will be omitted.

In step S527, the CPU 301 performs the permission reception screen processing, and the processing proceeds to step S528. The processing is similar to the above-described processing in step S520, and the description will be omitted.

In step S528, the CPU 301 determines whether user agreement with the latest service permission message has been obtained in step S527. Specifically, the CPU 301 refers to the management information of a permission state (Figs. 4A to 4D) in the image processing apparatus 105 that is stored in the nonvolatile memory 309, and determines whether a value corresponding to the "agree (permitted)" is recorded as a value indicating an agreement status of a service permission message. In a case where a value corresponding to the "agree (permitted)" is recorded (YES in step S528), the processing proceeds to step S530. In a case where a value corresponding to the "agree (permitted)" is not recorded (NO in step S528), the processing proceeds to step S529.

In step S529, user agreement with the latest service permission message fails to be obtained and the disagree state is caused, and thus the CPU 301 deletes an ID (device identification information) and a password of the image processing apparatus 105 for the cloud service from the nonvolatile memory 309. That is, the CPU 301 deletes registration information of the image processing apparatus 105 in the cloud service. The CPU 301 also transmits, to the service providing server group 101, a request for deletion of the ID (device identification information) and the password of the image processing apparatus 105 (i.e., registration information of the image processing apparatus 105 in the cloud service). In this step, the CPU 301 can also display a message indicating that registration in the cloud service has been deleted, on the display unit 307. The processing then returns to step S521.

In step S530, the CPU 301 controls the display unit 307 to display a list screen of cloud services. Fig. 6C illustrates a display example of a list screen of cloud services.

In a case where the image processing apparatus 105 has been registered in a cloud service, a list of registered cloud services is displayed as options 621 to 624 as illustrated in Fig. 6C, by selecting the "print from cloud" menu 612 on the print screen in Fig. 6B. The processing then returns to step S531.

In step S531, the CPU 301 executes a function selected by the user from the cloud services displayed in step S530. The CPU 301 accesses the service providing server group 101, and performs control to transmit information to be used for a service selected by the user, to the service providing server unit (transmission destination) 101. For example, the CPU 301 transmits an ID (device identification information of the image processing apparatus 105) and a password that are stored in the nonvolatile memory 309, as account information (registration information of the image processing apparatus 105 in the cloud service), to open a service page for the user.

For example, in a case of a cloud photo storage, a list of images stored on a cloud is displayed, and processing corresponding to a subsequent user operation is performed. If the execution processing of the cloud service ends (if the use of the cloud service ends), the processing returns to step S521. According to the present embodiment, the processing is controlled to be performed in a state in which agreement with the latest service permission message has been obtained from the user, and therefore the processing becomes a legitimate operation (processing).

In step S532, the CPU 301 determines whether the user has performed a cloud service registration operation. In a case where the user has performed a cloud service registration operation (YES in step S532), the processing proceeds to step S533. In a case where the user the user has not performed a cloud service registration operation (NO in step S532), the processing returns to step S521.

In a case where none of users of the image processing apparatus 105 are registered in the cloud service, each cloud service is displayed in such a manner that an unregistered state is identifiable in the cloud service list in Fig. 6C. An operation icon (not illustrated) for receiving registration in the cloud service is then displayed. In a case where this operation icon is used, the CPU 301 determines that a registration operation has been performed.

The CPU 301 advances the processing to step S533 even in a case where a registration operation is performed on a cloud service registration screen included in a setting menu screen to be displayed by operating a gear icon 604 displayed on the initial screen in Fig. 6A.

In step S533, the CPU 301 determines whether the information acquired in step S523 indicates that a permission has been updated. In a case where a permission has been updated (YES in step S533), the processing proceeds to step S534. In a case where a permission has not been updated (NO in step S533), the processing proceeds to step S537 because the permitted state is in "recorded" as described above in step S524. The processing is similar to the above-described processing in step S518, and the description will be omitted.

In step S534, the CPU 301 acquires information regarding the latest permission message, from the server 102, and the processing proceeds to step S535. The processing is similar to the above-described processing in step S519, and the description will be omitted.

In step S535, the CPU 301 performs the permission reception screen processing, and the processing proceeds to step S537. The processing is similar to the above-described processing in step S520, and the description will be omitted.

In step S536, the CPU 301 determines whether user agreement with the latest service permission message has been obtained in step S535. In a case where user agreement with the latest service permission message has been obtained (YES in step S536), the processing proceeds to step S537. In a case where user agreement with the latest service permission message has not been obtained (NO in step S536), the processing proceeds to step S521 without executing the registration processing in the cloud service in step S537. The processing is similar to the above-described processing in step S528, and the description will be omitted.

In step S537, the CPU 301 accesses the service providing server group 101 and performs the registration processing in the cloud service. The CPU 301 transmits a registration request to the service providing server group 101 as well as information regarding the image processing apparatus 105 that is to be used for registration in the cloud service. Thereafter, the CPU 301 receives the ID (device identification information) and the password of the image processing apparatus 105 that have been created by the service providing server group 101 in response to the registration request, and stores the ID and the password in the nonvolatile memory 309. After the registration in the cloud service is completed, the processing proceeds to step S530, and the CPU 301 controls the display unit 307 to display the cloud service list.

In step S538, the CPU 301 determines whether another event has occurred. In a case where another event has occurred (YES in step S538), the processing proceeds to step S539. In a case where another event has not occurred (NO in step S538), the processing proceeds to step S540.

In step S539, the CPU 301 performs processing corresponding to the event determined in step S538 to have occurred. For example, the CPU 301 performs copy processing corresponding to a copy instruction, scan processing corresponding to a scan instruction, and setting processing corresponding to various setting operations. The processing then proceeds to step S548.

In step S540, the CPU 301 determines whether the network setting has been changed from the disabled state to the enabled state. In a case where the network setting has been changed from the disabled state to the enabled state (YES in step S540), the processing proceeds to step S541. In a case where the network setting has not been changed from the disabled state to the enabled state (NO in step S540), the processing proceeds to step S549. Specifically, when an operation of switching a setting value of the setting item of "enabling/disabling of setting of wireless LAN" from disabled to enabled is performed, and the state of the image processing apparatus 105 is switched from the state in which the network setting is disabled to a state of being actually connected to an access point serving as a connection destination, the CPU 301 determines in step S540 that the network setting has been changed from the disabled state to the enabled state. Alternatively, when an operation of switching a setting value of the setting item of "enabling/disabling of setting of wired LAN" from disabled to enabled is performed in the state in which the network setting is disabled, and the image processing apparatus 105 is actually connected with a device serving as a router, the CPU 301 determines in step S540 that the network setting has been changed from the disabled state to the enabled state.

In step S541, the CPU 301 controls the image processing apparatus 105 to connect to the AP registered in the infrastructure mode or the router, similarly to step S515. The processing then proceeds to step S542.

In step S542, the CPU 301 determines whether an initial permission completion flag stored in the nonvolatile memory 309 is set to OFF. In a case where an initial permission completion flag is set to OFF (YES in step S542), the processing proceeds to step S543 because initial permission has not been executed yet. In contrast, in a case where an initial permission completion flag is set to ON (NO in step S542), the processing proceeds to step S546 because initial permission has been executed.

In step S543, similarly to step S511, the CPU 301 acquires, from the server 102, information indicating the version of the latest permission message in the installation region (information from which the version of the latest permission message can be identified). The processing can also be made similar to the processing in step S517 described above, by acquiring the information from the server 103.

In step S544, the CPU 301 receives the presence or absence of agreement with (permission for) each latest permission message in the installation region from the user through the permission reception screen processing, similarly to step S512. Specifically, the CPU 301 controls the display unit 307 to display a permission reception screen for receiving an operation representing user agreement with a permission matter indicating that the user permits the transmission of information from the image processing apparatus 105 to the service providing server group (transmission destination) 101. The permission reception screen processing will be described below with reference to Figs. 7A, 7B1 and 7B2.

In step S545, the CPU 301 changes the initial permission completion flag stored in the nonvolatile memory 309 from OFF to ON because the initial permission has been completed, similarly to step S513. The processing then proceeds to step S521.

In step S546, the CPU 301 determines whether user agreement with the latest service permission message has been obtained similarly to step S516. In a case where agreement has been obtained (YES in step S546), the processing proceeds to step S547. In a case where agreement has not been obtained (NO in step S546), the processing proceeds to step S549. The processing is similar to the above-described processing in step S516, and the description will be omitted.

In step S547, the CPU 301 acquires, similarly to step S517, information indicating whether a permission has been updated from the server 103, and the processing proceeds to step S548. The processing is similar to the above-described processing in step S517, and the description will be omitted.

In step S548, the CPU 301 determines whether an operation for returning to the initial screen (home screen) has been received from the user while the image processing apparatus 105 is connected to the network. Examples of the operation for returning to the initial screen include the end of a print job from a cloud, the end of the network setting, and the press of a button (not illustrated) for returning to the initial screen. In a case where an operation for returning to the initial screen has been received (YES in step S548), the processing returns to step S518. In a case where an operation for returning to the initial screen has not been received (NO in step S548), the processing proceeds to step S549.

In step S549, the CPU 301 determines whether an event of turning the power of the image processing apparatus 105 off has occurred. In a case where an event of turning the power of the image processing apparatus 105 off has occurred (YES in step S549), the processing in the flowcharts in Figs. 5A to 5C ends. In a case where an event of turning the power of the image processing apparatus 105 off has not occurred (NO in step S549), the processing returns to step S522.

As compared with a case where the permission reception screen is displayed irrespective of whether the image processing apparatus 105 is connected to a network (internet), according to the processing in Figs. 5A to 5C, the user is required to perform a permission operation only once after network connection, and it is accordingly possible to reduce the number of useless operations. Information transmission is not performed by a user who does not use a network (i.e., a user who uses the image processing apparatus 105 serving as a printer without connecting the image processing apparatus 105 to the internet), it is originally unnecessary to obtain agreement with a permission matter regarding information transmission. The permission reception screen is not displayed to such a user in a state in which the image processing apparatus 105 is unconnected to the network, there is thus no need to perform an operation of permitting the permission matter, and it is possible to reduce the number of useless operations

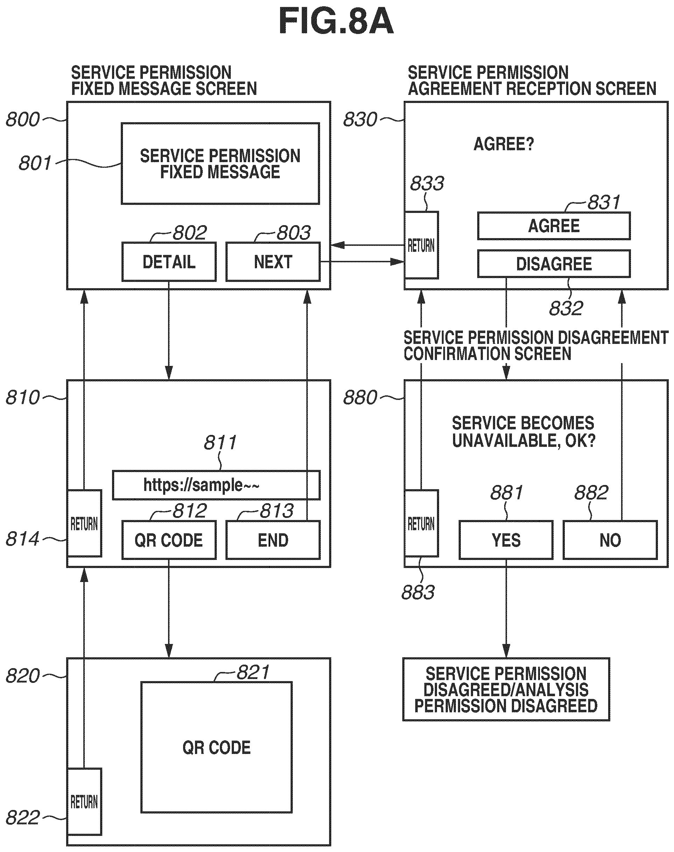

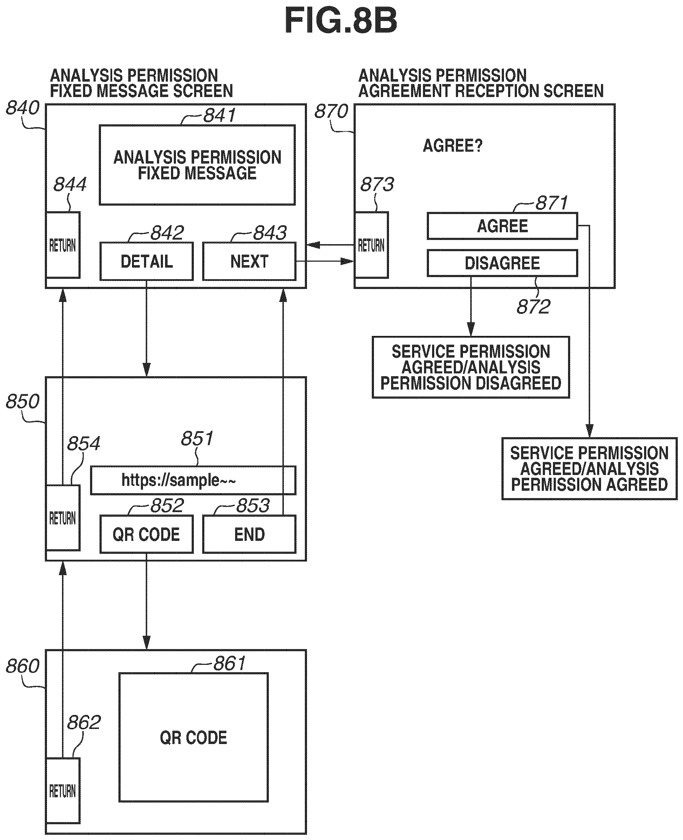

Figs. 7A, 7B1 and 7B2 are flowcharts illustrating details of the permission reception screen processing in steps S512, S520, S527, S535, and S544. Figs. 8A and 8B illustrate various display examples to be displayed on the display unit 307 in the permission reception screen processing. Each piece of processing in the flowcharts in Figs. 7A to 7B2 is implemented by the CPU 301 loading a program stored in the program memory 302, onto the RAM 310, and executing the program.

In step S701, the CPU 301 determines whether a service permission is to be obtained again. Specifically, the CPU 301 compares a version of a service permission message permitted by the user, and a version of a latest service permission message to be agreed with.

The version of the service permission message permitted by the user is identified from a permission message version recorded in the management information of a permission state (Figs. 4A to 4D) in the image processing apparatus 105 that is stored in the nonvolatile memory 309. The version of the latest service permission message to be agreed with is identified from the version of the latest permission set in the region (country) where the image processing apparatus 105 is installed that has been acquired from the server 102 or 103. In a case where the version of the service permission message permitted by the user is smaller than the version of the latest service permission message to be agreed with, the CPU 301 determines that a service permission message is to be permitted again (agreed with again) (YES in step S701), the processing proceeds to step S702. In a case where the CPU 301 determines that a service permission message is not to be permitted again (NO in step S701), the processing proceeds to step S714. Even in a case where "unpermitted (default value)" is recorded for the service permission message in the management information of a permission state in the image processing apparatus 105 that is stored in the nonvolatile memory 309, and the processing proceeds to step S702.

Alternatively, the processing may proceed to step S702 by skipping the processing in step S701, and control can be performed to reacquire agreement with a service permission message in a case where a permission version is updated. In this case, agreement with the version of the service permission message is obtained again even if the service permission message itself has not been updated from the service permission message that the user has agreed with. In a case where the processing in Figs. 7A to 7B2 is performed after the processing proceeds to step S520 in the case where it is determined that the permission message has been updated (YES in step S518), the processing can proceed to step S702 by skipping the processing in step S701. The same applies to a case where the processing proceeds to step S527 after it is determined in step S525 that the permission has been updated (YES in in step S525), and a case where the processing proceeds to step S535 after it is determined in step S533 that the permission has been updated (YES in in step S533).

In step S702, the CPU 301 displays a service permission fixed message 801 on a service permission fixed message screen 800 in Fig. 8A. The service permission fixed message 801 is similar to the service permission message in Fig. 2A, but a message at least partially different from a version 2 or a later version of a service permission message is displayed. More specifically, a message asking for a user permission for the transmission of information regarding a service use is displayed, and a consistent message is displayed irrespective of the installation region (country) of the image processing apparatus 105 or the version of the service permission message. The service permission fixed message 801 can be the same as the message of the version 1 of the service permission message.

In step S703, the CPU 301 determines whether a detail button 802 has been touched (operation of selection, hereinafter, also referred to as "pressed") on the service permission fixed message screen 800. In a case where the detail button 802 has been pressed (YES in step S703), the processing proceeds to step S704.

In step S704, the CPU 301 acquires destination information stored in the nonvolatile memory 309, and display language information preset by the user to be displayed on a user interface (UI) of the image processing apparatus 105.

The destination information is information prerecorded on the nonvolatile memory 309 in a factory default state of the image processing apparatus 105, and information basically unchangeable by the user. Examples of the recorded destination information include, for example, information indicating any of Japan (JPN), Korea (KOR), the United States (USA), Europe (EOR), Australia (AUS), Southeast Asia (ASA), China (CHN), Taiwan (TWN), and Brazil (BRA).

The display language information is a setting item to be set by the user, and is set from a setting item of a display language that is included in the setting menu screen to be displayed by operating the gear icon 604 displayed on the initial screen in Fig. 6A. As the display language information, any of Japanese, English, Chinese, French, and German can be set.

In step S705, the CPU 301 controls the display unit 307 to display a URL character string display screen 810 on which a uniform resource locator (URL) for accessing the web server 104 includes a character string 811 to which the destination information and the display language information acquired in step S704 are allocated as a query parameter. The query parameter is a URL parameter. For example, the CPU 301 displays "https://www.sample.co.jp/service?destination_code=01&language_code=01" as the character string 811. A part following "?" is the URL parameter, and in this part, "destination_code=01" corresponds to the destination information. "01" is a value indicating Japan. "language_code=01" corresponds to the display language information. "01" is a value indicating Japanese.

In step S706, the CPU 301 determines whether a quick response (QR) code^{®} button 812 has been pressed on the URL character string display screen 810 in Fig. 8A. In a case where the QR code button 812 has been pressed (YES in step S706), the processing proceeds to step S707.

In step S707, the CPU 301 controls the display unit 307 to display a QR code display screen 820 including a QR code 821. The QR code 821 is a QR code obtained by encoding the character string 811 displayed on the URL character string display screen 810 in Fig. 8A, and can be read by scanning with a camera of the mobile terminal 106. The QR code 821 is a two-dimensional code, and the character string 811 can be acquired by reading and decoding the QR code 821 with the mobile terminal 106. That is, the QR code 821 is a code image including information regarding the character string 811. The QR code 821 can be a different code as long as the code is in a format readable by the camera of the mobile terminal 106. In place of the QR code 821, a two-dimensional code of another type, a one-dimensional code (barcode, etc.), or another code image (color code, etc.) can also be used.

In steps S705 and S707, the CPU 301 functions as a display control unit (i.e., a display control means), and controls the display unit 307 to display information indicating a URL including added additional information making an installation region of the image processing apparatus 105 identifiable that is stored in the nonvolatile memory 309, without displaying a service permission matter itself. The above-described URL is a URL for displaying a service permission matter stored in the web server 104. The above-described URL is also a URL to which additional information indicating a setting of a display language is added. The information indicating the URL is, for example, the character string 811 or the QR code 821. The additional information is a URL parameter, for example. The additional information making a region identifiable is, for example, information that is based on destination information stored in the nonvolatile memory 309 from the factory default state of the image processing apparatus 105.

The above-described URL can be a URL to which information indicating at least a part of an IP address dynamically allocated to the image processing apparatus 105 is added as additional information capable of identifying the above-described region.

In a case where the service permission message in Fig. 2A that is to be agreed with by the user and stored in the web server 104 is the same as the service permission fixed message 801 stored in the nonvolatile memory 309, the CPU 301 can perform control not to display information indicating a URL.

The above-described URL can be a URL to which additional information indicating the version of the service permission message acquired in step S517 or S523 is further added.

If the character string 811 displayed on the URL character string display screen 810 in Fig. 8A is entered into an address bar on a web browser to be executed on the mobile terminal 106, and access is made to an address indicated by the character string 811, the following processing is performed. If the QR code 821 displayed on the QR code display screen 820 in Fig. 8A is captured and decoded with the camera of the mobile terminal 106, and access is made to an address indicated in the obtained character string 811, the following processing is performed.

The mobile terminal 106 accesses the address indicated in the character string 811. An access destination is referred to as the web server 104. If the mobile terminal 106 accesses the address indicated in the character string 811, the mobile terminal 106 transmits information regarding the URL parameter included in the character string 811, to the access destination, and issues a request for a web page corresponding to the URL parameter, to the web server 104.

The web server 104 accessed by the mobile terminal 106 receives the information regarding the URL parameter included in the character string 811. The web server 104 then acquires (extracts) destination information and display language information of the image processing apparatus 105 from the URL parameter included in the character string 811. The web server 104 then transmits, to the mobile terminal 106, a web page on which a service permission message corresponding to the acquired destination information and the display language information is displayed. For example, the web server 104 transmits a HyperText Markup Language (HTML) file corresponding to the acquired destination information and the display language information, to the mobile terminal 106.

By displaying the web page transmitted in this manner, on the web browser on the mobile terminal 106, it is possible to display a latest service permission message corresponding to the destination information and the display language information of the image processing apparatus 105, on the mobile terminal 106. The service permission message to be displayed is, for example, the message illustrated in Fig. 2A. If the mobile terminal 106 accesses the displayed information indicating the URL, a service permission matter corresponding to a region of the destination information is automatically displayed. The mobile terminal 106 is one type of a different device. The user selects an operation of agreeing or disagreeing with the service permission message by operating the image processing apparatus 105 after browsing the web page displayed on the mobile terminal 106.

In step S708, the CPU 301 determines whether a return button 822 has been pressed on the QR code display screen 820. In a case where the return button 822 has been pressed (YES in step S708), the processing returns to step S705.

In step S709, the CPU 301 determines whether an end button 813 or a return button 814 has been pressed on the URL character string display screen 810. In a case where the end button 813 or the return button 814 has been pressed (YES in step S709), the processing returns to step S702. In a case where the end button 813 or the return button 814 has not been pressed (NO in step S709), the processing returns to step S706.

In step S710, the CPU 301 determines whether a next button 803 has been pressed on the service permission fixed message screen 800. In a case where the next button 803 has been pressed (YES in step S710), the processing proceeds to step S711.

In step S711, the CPU 301 controls the display unit 307 to display a service permission message agreement reception screen 830. On the service permission message agreement reception screen 830, an "agree" button 831 and a "disagree" button 832 are displayed.

In step S712, the CPU 301 determines whether the "agree" button 831 has been pressed on the service permission message agreement reception screen 830 (Fig. 8A). The CPU 301 functions as a reception unit, and receives an operation representing user agreement with a service permission matter indicating that the user permits the transmission of information from the image processing apparatus 105 to the service providing server group (transmission destination) 101. In a case where the "agree" button 831 has been pressed (YES in step S712), the processing proceeds to step S714. In a case where the "agree" button 831 has not been pressed (NO in step S712), the processing proceeds to step S713.

The case where the processing proceeds to step S726 or S728 to be described below includes only a case where agreement with the service permission message has been selected, and thus agreement with the service permission message is not recorded in the management information of a permission state at the time point at which it is determined that the "agree" button 831 has been pressed (YES in step S712), and the agreement is recorded in step S726 or S728.

Nevertheless, at the time point at which it is determined that the "agree" button 831 has been pressed (YES in step S712), the CPU 301 can record agreement with the service permission message in the management information of a permission state.

In step S713, the CPU 301 determines whether the "disagree" button 832 has been pressed on the service permission message agreement reception screen 830. In a case where the "disagree" button 832 has been pressed (YES in step S713), the processing proceeds to step S730. In a case where the "disagree" button 832 has not been pressed (NO in step S713), the processing proceeds to step S734.

In step S714, the CPU 301 controls the display unit 307 to display an analysis permission fixed message 841 on an analysis permission fixed message screen 840 in Fig. 8B. The analysis permission fixed message 841 is similar to the analysis permission message in Fig. 2B, but a message at least partially different from a version 2 or a later version of an analysis permission message is displayed. More specifically, a message asking for a user permission for the transmission of information (analysis report) regarding a usage situation of the image processing apparatus 105 is displayed, and a consistent message is displayed irrespective of the installation region (country) of the image processing apparatus 105 or the version of the analysis permission message. The analysis permission fixed message 841 can be the same as the message of the version 1 of the analysis permission message.

In step S715, the CPU 301 determines whether a detail button 842 has been pressed on the analysis permission fixed message screen 840. In a case where the detail button 842 has been pressed (YES in step S715), the processing proceeds to step S716.

In step S716, the CPU 301 acquires, similarly to step S704, destination information stored in the nonvolatile memory 309 and display language information set by the user.

In step S717, the CPU 301 controls the display unit 307 to display a URL character string display screen 850 on which a URL for accessing the web server 104 includes a character string 851 to which the destination information and the display language information acquired in step S716 are allocated as a query parameter. For example, the CPU 301 displays "https://www.sample.co.jp/analysis?destination_code=01&language_code=01" as the character string 851. A part following "?" is a URL parameter, and in this part, "destination_code=01" corresponds to the destination information. "01" is a value indicating Japan. "language_code=01" corresponds to the display language information. "01" is a value indicating Japanese.

In step S718, the CPU 301 determines whether a QR code button 852 has been pressed on the URL character string display screen 850. In a case where the QR code button 852 has been pressed (YES in step S718), the processing proceeds to step S719.

In step S719, the CPU 301 controls the display unit 307 to display a QR code display screen 860 including a QR code 861 that can be read with the mobile terminal 106. The QR code 861 on the QR code display screen 860 is a QR code obtained by encoding the character string 851 displayed on the URL character string display screen 850 in Fig. 8B, and can be read by capturing with a camera of the mobile terminal 106. The QR code 861 is a two-dimensional code, and the character string 851 can be acquired by reading and decoding the QR code 861 with the mobile terminal 106. That is, the QR code 861 is a code image including information regarding the character string 851. The QR code 861 can be a different code as long as the code is in a format readable by the camera of the mobile terminal 106. In place of the QR code 861, a two-dimensional code of another type, a one-dimensional code (e.g., barcode), or another code image (e.g., color code) can be displayed.

In steps S717 and S719, the CPU 301 controls the display unit 307 to display information indicating a URL including added additional information making an installation region of the image processing apparatus 105 identifiable that is stored in the nonvolatile memory 309, without displaying an analysis permission matter itself.

The above-described URL is a URL for displaying an analysis permission matter stored in the web server 104. The above-described URL is also a URL to which additional information indicating a setting of a display language is added. The information indicating the URL is, for example, the character string 851 or the QR code 861.

The additional information is, for example, a URL parameter. The additional information making a region identifiable is, for example, information that is based on destination information stored in the nonvolatile memory 309 from the factory default state of the image processing apparatus 105.

The above-described URL can be a URL to which information indicating at least a part of an IP address dynamically allocated to the image processing apparatus 105 is added as the above-described additional information capable of identifying a region.

In a case where the analysis permission message in Fig. 2B that is to be agreed with by the user and stored in the web server 104 is the same as the analysis permission fixed message 841 stored in the nonvolatile memory 309, the CPU 301 can perform control not to display information indicating a URL.

The above-described URL can also be a URL to which additional information indicating the version of the analysis permission message acquired in step S517 or S523 is added.

The character string 851 displayed on the URL character string display screen 850 illustrated in Fig. 8B is entered into an address bar of a web browser to be executed on the mobile terminal 106, and access is made to an address indicated by the character string 851. As a result, a latest analysis permission message (message exemplified in Fig. 2B) corresponding to the destination information and the display language information included in the URL parameter included in the character string 851 is displayed on a display unit of the mobile terminal 106 through the processing similar to the display of the above-described service permission message. The user operates the image processing apparatus 105 after browsing the web page displayed on the mobile terminal 106, and thereby selects an operation of agreeing or disagreeing with the analysis permission message.

In step S720, the CPU 301 determines whether a return button 862 has been pressed on the QR code display screen 860. In a case where the return button 862 has been pressed (YES in step S720), the processing returns to step S717.

In step S721, the CPU 301 determines whether an end button 853 or a return button 854 has been pressed on the URL character string display screen 850. In a case where the end button 853 or the return button 854 has been pressed (YES in step S721), the processing returns to step S714. In a case where the end button 853 or the return button 854 has not been pressed (NO in step S721), the processing returns to step S718.

In step S722, the CPU 301 determines whether a next button 843 has been pressed on the analysis permission fixed message screen 840. In a case where the next button 843 has been pressed (YES in step S722), the processing proceeds to step S724. In a case where the next button 843 has not been pressed (NO in step S722), the processing proceeds to step S723.

In step S723, the CPU 301 determines whether a return button 844 has been pressed on the analysis permission fixed message screen 840. In a case where the return button 844 has been pressed (YES in step S723), the processing returns to step S711. In a case where the return button 844 has not been pressed (NO in step S723), the processing returns to step S715.

In step S724, the CPU 301 controls the display unit 307 to display an analysis permission message agreement reception screen 870.

In step S725, the CPU 301 determines whether an "agree" button 871 has been pressed on the analysis permission message agreement reception screen 870. The CPU 301 receives an operation representing user agreement with an analysis permission matter indicating that the user permits the transmission of information from the image processing apparatus 105 to the service providing server unit (transmission destination) 101. In a case where the "agree" button 871 has been pressed (YES in step S725), the processing proceeds to step S726. In a case where the "agree" button 871 has not been pressed (NO in step S725), the processing proceeds to step S727.

In step S726, the CPU 301 stores information indicating that the user has agreed with a service permission message and agreed with an analysis permission message, into the management information of a permission state in the nonvolatile memory 309 in association with information indicating the version of the permission set that has been acquired from the server 102 or 103, and ends the permission reception screen processing. That is, the information indicating that the user has agreed with a service permission message and agreed with an analysis permission message is stored in association with the information indicating the updated version of the latest permission set in the installation region. At this time, the CPU 301 functions as a saving unit.

In step S727, the CPU 301 determines whether a "disagree" button 872 has been pressed on the analysis permission message agreement reception screen 870. In a case where the "disagree" button 872 has been pressed (YES in step S727), the processing proceeds to step S728. In a case where the "disagree" button 872 has not been pressed (NO in step S727), the processing proceeds to step S729.

In step S728, the CPU 301 stores information indicating that the user has agreed with a service permission message and disagreed with an analysis permission message, into the management information of a permission state in the nonvolatile memory 309 in association with information indicating the version of the permission set that has been acquired from the server 102 or 103. The CPU 301 then ends the permission reception screen processing.

In step S729, the CPU 301 determines whether a return button 873 has been pressed on the analysis permission message agreement reception screen 870. In a case where the return button 873 has been pressed (YES in step S729), the processing returns to step S714. In a case where the return button 873 has not been pressed (NO in step S729), the processing returns to step S725.

In step S734, the CPU 301 determines whether a return button 833 has been pressed on the service permission message agreement reception screen 830. In a case where the return button 833 has been pressed (YES in step S734), the processing returns to step S702. In a case where the return button 833 has not been pressed (NO in step S734), the processing returns to step S712.

In step S730, the CPU 301 controls the display unit 307 to display a service permission disagreement confirmation screen 880.

In step S731, the CPU 301 determines whether a Yes button 881 has been pressed on the service permission disagreement confirmation screen 880. In a case where the Yes button 881 has been pressed (YES in step S731), the processing proceeds to step S732. In a case where the Yes button 881 has not been pressed (NO in step S731), the processing proceeds to step S733.

In step S732, the CPU 301 stores information indicating that the user has disagreed with a service permission message and disagreed with an analysis permission message, into the management information of a permission state in the nonvolatile memory 309 in association with information indicating the version of the permission set that has been acquired from the server 102 or 103. The CPU 301 then ends the permission reception screen processing.

In step S733, the CPU 301 determines whether a No button 882 or a return button 883 has been pressed on the service permission disagreement confirmation screen 880. In a case where the No button 882 or the return button 883 has been pressed (YES in step S733), the processing returns to step S711. In a case where the No button 882 or the return button 883 has not been pressed (NO in step S733), the processing returns to step S731.

From when the permission reception screen processing in Figs. 7A, 7B1 and 7B2 has started in step S701 to when the processing ends in step S726, S728 or S732, a screen other than the screens related to permission guidance that are illustrated in Figs. 8A and 8B can also be made undisplayable.

In a case where a permission matter in a permission fixed message stored in the image processing apparatus 105 is sufficient, a URL for accessing the web server 104 can be made undisplayable. Specifically, the detail buttons 802 and 842 on the service permission fixed message screen 800 and the analysis permission fixed message screen 840 are deleted, and screen transition to the screens 810 and 850 that display a URL for accessing the web server 104 is made inexecutable.

In steps S705 and S717, destination information and display language information are added as a query parameter to the URL for accessing the web server 104. However, another type of information that enables the web server 104 to select an appropriate permission message can also be added. Specifically, the examples of the information include sendable permission versions of the service permission and the analysis permission, and region information indicating a connection destination country where the image processing apparatus 105 connects to the service providing server group 101. To avoid asking for agreement with a permission item unnecessary for the user, information that enables the web server 104 to recognize a service available to the image processing apparatus 105 can also be added as a query parameter. Specifically, examples of the information include information regarding functions of the image processing apparatus 105.

In a case where the display unit 307 displays a permission message, a long character string sometimes fails to be correctly displayed or fails to be displayed with good visibility, due to restrictions on the display on the display unit 307 (restrictions on the size, the resolution, and the number of characters that can be displayed at a time that is attributed to a UI design of an embedded device). In contrast to this, the present embodiment makes it possible for the user to check a permission message by displaying the permission message on a display unit (display) of the mobile terminal 106 that is expected to have less restriction (higher performance) than that of the display unit 307 of the image processing apparatus 105. The user can accordingly check a character string of a correct permission message even if the character string is long, without being subjected to restrictions such as limitation of number of characters. The user can also check a character string of a permission message with good visibility. The user can therefore accurately understand a permission message and select whether or not to agree with the permission message. On the mobile terminal 106, a permission message is automatically displayed that is based on the installation region and the display language of the image processing apparatus 105. It is thus possible for the user to save the trouble of selecting the installation region or the display language of the image processing apparatus 105 and to check a permission message complying with the law of the installation region of the image processing apparatus 105.

The above-described various types of control to be performed by the image processing apparatus 105 can be performed by a single hardware component, or a plurality of hardware components (e.g., a plurality of processors or circuits) can also control the entire image processing apparatus 105 by sharing processing.

The present invention has been described in detail based on the embodiments, but the present invention is not limited to these specific embodiments. Furthermore, each of the above-described embodiments merely indicates an embodiment of the present invention, and the embodiments can also be appropriately combined.

In each of the above-described embodiments, the description has been given of an example case where the present invention is applied to an image processing apparatus. However, this is not limited to this example. The present invention can be applied to an electronic device as long as the electronic device is an electronic device that transmits information to a server. In other words, the present invention can be applied to a personal computer, a personal digital assistance (PDA), a mobile phone terminal, a portable image viewer, a printer apparatus including a display, a digital photo frame, a music player, a game machine, and an electronic book reader.

According to the present embodiment, it is possible to provide a structure of enabling an operation of receiving agreement with a permission matter regarding information transmission, to be performed more desirably.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, and a memory card.

## Claims

1. An electronic device comprising:
connection control means for controlling the electronic device to connect with a network communicable with a specific external system; and
display control means for performing control to display a reception screen for receiving an operation representing user agreement with a permission matter regarding transmission of information from the electronic device to a transmission destination, based on the electronic device being connected with the network by the connection control means, and not to display the reception screen in a case where the electronic device is not connected with the network.

2. The electronic device according to claim 1,
wherein the display control means performs control to:
in a case where an operation for returning to a home screen is received while the electronic device is connected with the network, communicate with the specific external system and check whether the permission matter has been updated, and
in a case where the permission matter has not been updated, display a home screen, and in a case where the permission matter has been updated, display a reception screen for receiving an operation representing user agreement with the updated permission matter.

3. The electronic device according to claim 1 or 2, wherein the display control means performs control to display, on the reception screen, information indicating a uniform resource locator, URL, for displaying a permission matter stored in a server without displaying the permission matter.

4. The electronic device according to any one of claims 1 to 3, further comprising saving means for saving, in a case where an operation representing agreement has been received on the reception screen, information indicating that the operation representing the agreement has been received.

5. The electronic device according to claim 4, wherein, in a case where an operation representing agreement has been received on the reception screen, the saving means saves the information indicating that the operation representing the agreement has been received, in association with a version of the permission matter.

6. The electronic device according to claim 4 or 5, wherein the display control means performs control to, in a case where the information indicating that the operation representing the agreement has been received is saved, communicate with the specific external system and check whether the permission matter has been updated, and, in a case where the permission matter has been updated, display a reception screen for receiving an operation representing user agreement with the updated permission matter.

7. The electronic device according to any one of claims 4 to 6,
wherein, in a case where an operation representing disagreement has been received on the reception screen, the saving means saves information indicating that the operation representing the disagreement has been received, and
wherein, in a case where the information indicating that the operation representing disagreement has been received is saved, the display control means performs control not to display the reception screen.

8. The electronic device according to any one of claims 1 to 7, wherein the display control means performs control to display a home screen after performing control to display the reception screen.

9. The electronic device according to any one of claims 1 to 8, wherein, in a case where a network setting has been changed from disabled to enabled, the connection control means controls the electronic device to connect with the network, and the display control means performs control to receive an operation for returning to a home screen, and, in a case where the permission matter has been updated, display the home screen after displaying the reception screen.

10. The electronic device according to any one of claims 1 to 9, wherein the permission matter is a permission text.

11. The electronic device according to claim 10, wherein the permission text is stored in the specific external system, and updated in response to function addition or law amendment.

12. The electronic device according to any one of claims 1 to 11, wherein the electronic device is a printer that can execute print processing.

13. A method for controlling an electronic device, the method comprising:
controlling the electronic device to connect with a network communicable with a specific external system; and
performing control to display a reception screen for receiving an operation representing user agreement with a permission matter indicating that a user permits transmission of information from the electronic device to a transmission destination, based on the electronic device being connected with the network, and not to display the reception screen in a case where the electronic device is not connected with the network.

14. A computer program comprising instructions which, when executed by a computer, cause the computer to perform the method according to claim 13.

15. A computer-readable storage medium storing the computer program of claim 14.
